# EUROPEAN PATENT APPLICATION

(11) **EP 4 832 437 A1**
(43) Date of publication of application: **28.10.2026**
(21) Application number: 25738511.2
(22) Date of filing: 09.01.2025
(51) Int. Cl.: H04L 41/0894

(54) **POLICY GROUP MANAGEMENT METHOD, DEVICE AND SYSTEM**

(30) Priority: 10.01.2024 CN 202410045242
(71) Applicant: Huawei Technologies Co., Ltd., Shenzhen, Guangdong 518129 (CN)
(72) Inventor: XIA, Haitao, Shenzhen, Guangdong 518129 (CN)
(74) Representative: Huawei European IPR
(86) International application number: PCT/CN2025/071536
(87) International publication number: WO 2025/148983

(57) **Abstract**

This application provides a policy group management method, applied to a network functions virtualisation management and orchestration NFV-MANO architecture. The method is performed by a first function entity, and includes: receiving a first request message, where the first request message is used to request to perform a policy group management operation on a first policy group, and the first request message includes identification information of a second policy group; and performing the policy group management operation on the first policy group based on the identification information of the second policy group, where the second policy group is a member policy group of the first policy group, and the second policy group includes one or more member policies. According to the foregoing technical solution, when a policy group management operation is performed on a policy group, the policy group management operation may be performed by member policy group. In this way, in complex automatic operation and maintenance NFV-MANO scenarios, policies that require consistent collective execution can be flexibly orchestrated, and costs of a policy group update operation can be reduced.

## Description

This application claims priority to Chinese Patent Application No. 202410045242.6, filed with the China National Intellectual Property Administration on January 10, 2024 and entitled "POLICY GROUP MANAGEMENT METHOD, APPARATUS, AND SYSTEM", which is incorporated herein by reference in its entirety.

### TECHNICAL FIELD

This application relates to the field of communication technologies, and in particular, to a policy group management method, an apparatus, and a system.

### BACKGROUND

Network functions virtualisation (network functions virtualisation, NFV) is a technology adopted by telecommunication network operators, drawing inspiration from virtualisation technologies in the information technology (information technology, IT) field. NFV decouples telecommunications network functions from hardware by implementing them as software on generic cloud servers, switches, and storage devices. This enables rapid and efficient deployment of network services (network service, NS), and reduces capital expenditure (CAPital EXpenditure, CAPEX) and operating expense (OPerating Expense, OPEX). This technology requires telecommunication network functions to be implemented as software, capable of operating on hardware of generic servers. These functions can be migrated, instantiated, and deployed at different physical locations within a network as needed, without the need to install new devices.

NFV management and orchestration (network functions virtualisation management and orchestration, NFV-MANO) is an architectural framework for managing and coordinating network services NSs, virtual network functions (virtual network function, VNF), and other software components. Within policy management functions of the NFV-MANO, policy group management is included. Specifically, the policy group management includes management operations such as adding, deleting, modifying, and querying one or more policy groups. A policy group refers to an object structure that includes a group of policies requiring collective execution (for example, activating the policies or deactivating the policies).

However, an information model for the policy group has some limitations in an NFV-MANO policy management scenario. For example, in complex automatic operation and maintenance scenarios involving management of a large quantity of interrelated policies, costs of a policy group update operation are high. First, each member policy needs to be individually validated to determine whether adding or moving the member from a policy group is feasible (that is, considering correlation with other member policy in the group). Second, efficiency of the policy group update operation is low, as member policies being added to or removed from the policy group need to be processed individually.

Therefore, how to flexibly orchestrate policies requiring consistent collective execution and reduce costs of updating policy groups becomes an urgent problem to be resolved in application policy group management currently.

### SUMMARY

This application provides a policy group management method, to flexibly orchestrate policies that require consistent collective execution, and reduce costs of updating policy groups in complex automatic operation and maintenance NFV-MANO scenarios.

According to a first aspect, a policy group management method is provided, applied to a network functions virtualisation management and orchestration NFV-MANO architecture, and including: receiving a first request message, where the first request message is used to request to perform a policy group management operation on a first policy group, and the first request message includes identification information of a second policy group; and performing the policy group management operation on the first policy group based on the identification information of the second policy group, where the second policy group is a member policy group of the first policy group, and the second policy group includes one or more member policies.

According to the technical solution of this application, when a policy group management operation is performed on a policy group, the policy group management operation may be performed by member policy group. In this way, in complex automatic operation and maintenance NFV-MANO scenarios, policies that require consistent collective execution can be flexibly orchestrated, and costs of a policy group update operation can be reduced.

With reference to the first aspect, in some implementations of the first aspect, the policy group management operation includes either of the following: policy group creation and policy group update. According to the foregoing technical solution, in complex automatic operation and maintenance NFV-MANO scenarios, policies that require consistent collective execution can be flexibly orchestrated, and costs of a policy group update operation can be reduced.

With reference to the first aspect, in some implementations of the first aspect, when the policy group management operation is the policy group creation, the performing the policy group management operation on the first policy group based on the identification information of the second policy group includes: determining, based on the identification information of the second policy group, to add the member policy of the second policy group to the first policy group. According to the foregoing technical solution, in complex automatic operation and maintenance NFV-MANO scenarios, policies that require consistent collective execution can be flexibly orchestrated, and costs of a policy group update operation can be reduced.

With reference to the first aspect, in some implementations of the first aspect, the first request message further includes parameter information of the first policy group, and the method further includes: configuring the parameter information of the first policy group, where the parameter information of the first policy group includes at least one of the following: a highest-level NFV object to which a member policy of the first policy group is applied, a type of an operation and maintenance scenario to which a member policy of the first policy group is applied, a priority of the first policy group, and an identifier of a policy group that has a dependency with the first policy group. According to the foregoing technical solution, in complex automatic operation and maintenance NFV-MANO scenarios, policies that require consistent collective execution can be flexibly orchestrated, and costs of a policy group update operation can be reduced.

With reference to the first aspect, in some implementations of the first aspect, when the policy group management operation is the policy group update, and the second policy group is a policy group to be deleted from the first policy group, the performing the policy group management operation on the first policy group based on the identification information of the second policy group includes: deleting the second policy group from the first policy group based on the identification information of the second policy group. According to the foregoing technical solution, in complex automatic operation and maintenance NFV-MANO scenarios, policies that require consistent collective execution can be flexibly orchestrated, and costs of a policy group update operation can be reduced.

With reference to the first aspect, in some implementations of the first aspect, when the policy group management operation is the policy group update, and the second policy group is a member policy group to be added to the first policy group, the performing the policy group management operation on the first policy group based on the identification information of the second policy group includes: adding the second policy group to the first policy group based on the identification information of the second policy group. According to the foregoing technical solution, in complex automatic operation and maintenance NFV-MANO scenarios, policies that require consistent collective execution can be flexibly orchestrated, and costs of a policy group update operation can be reduced.

With reference to the first aspect, in some implementations of the first aspect, the method further includes: updating parameter information of the first policy group, where the parameter information of the first policy group includes at least one of the following: a highest-level NFV object to which a member policy of the first policy group is applied, a type of an operation and maintenance scenario to which a member policy of the first policy group is applied, a priority of the first policy group, and an identifier of a member policy group that has a dependency with the first policy group. According to the foregoing technical solution, in complex automatic operation and maintenance NFV-MANO scenarios, policies that require consistent collective execution can be flexibly orchestrated, and costs of a policy group update operation can be reduced.

According to a second aspect, a policy group management method is provided, applied to a network functions virtualisation management orchestration NFV-MANO architecture, and including: sending a first request message, where the first request message is used to request to perform a policy group management operation on a first policy group, and the first request message includes identification information of a second policy group; and the second policy group is a member policy group of the first policy group, and the second policy group includes one or more member policies.

According to the technical solution of this application, when a policy group management operation is performed on a policy group, the policy group management operation may be performed by member policy group. In this way, in complex automatic operation and maintenance NFV-MANO scenarios, policies that require consistent collective execution can be flexibly orchestrated, and costs of a policy group update operation can be reduced.

With reference to the second aspect, in some implementations of the second aspect, the policy group management operation includes either of the following: policy group creation and policy group update. According to the foregoing technical solution, in complex automatic operation and maintenance NFV-MANO scenarios, policies that require consistent collective execution can be flexibly orchestrated, and costs of a policy group update operation can be reduced.

With reference to the second aspect, in some implementations of the second aspect, the first request message further includes parameter information of the first policy group, and the parameter information of the first policy group includes at least one of the following: a highest-level NFV object to which a member policy of the first policy group is applied, a type of an operation and maintenance scenario to which a member policy of the first policy group is applied, a priority of the first policy group, and an identifier of a policy group that has a dependency with the first policy group. According to the foregoing technical solution, in complex automatic operation and maintenance NFV-MANO scenarios, policies that require consistent collective execution can be flexibly orchestrated, and costs of a policy group update operation can be reduced.

According to a third aspect, a communication apparatus is provided, including: a transceiver unit, configured to receive a first request message, where the first request message is used to request to perform a policy group management operation on a first policy group, and the first request message includes identification information of a second policy group; and a processing unit, configured to perform the policy group management operation on the first policy group based on the identification information of the second policy group, where the second policy group is a member policy group of the first policy group, and the second policy group includes one or more member policies.

With reference to the third aspect, in some implementations of the third aspect, the policy group management operation includes either of the following: policy group creation and policy group update.

With reference to the third aspect, in some implementations of the third aspect, when the policy group management operation is the policy group creation, the processing unit is specifically configured to determine, based on the identification information of the second policy group, to add the member policy of the second policy group to the first policy group.

With reference to the third aspect, in some implementations of the third aspect, the first request message further includes parameter information of the first policy group, and the processing unit is further configured to configure the parameter information of the first policy group, where the parameter information of the first policy group includes at least one of the following: a highest-level NFV object to which a member policy of the first policy group is applied, a type of an operation and maintenance scenario to which a member policy of the first policy group is applied, a priority of the first policy group, and an identifier of a policy group that has a dependency with the first policy group.

With reference to the third aspect, in some implementations of the third aspect, when the policy group management operation is the policy group update, and the second policy group is a policy group to be deleted from the first policy group, the processing unit is specifically configured to delete the second policy group from the first policy group based on the identification information of the second policy group.

With reference to the third aspect, in some implementations of the third aspect, when the policy group management operation is the policy group update, and the second policy group is a member policy group to be added to the first policy group, the processing unit is specifically configured to add the second policy group to the first policy group based on the identification information of the second policy group.

With reference to the third aspect, in some implementations of the third aspect, the processing unit is specifically configured to update parameter information of the first policy group, where the parameter information of the first policy group includes at least one of the following: a highest-level NFV object to which a member policy of the first policy group is applied, a type of an operation and maintenance scenario to which a member policy of the first policy group is applied, a priority of the first policy group, and an identifier of a member policy group that has a dependency with the first policy group.

According to a fourth aspect, a communication apparatus is provided, including: a transceiver unit, configured to send a first request message, where the first request message is used to request to perform a policy group management operation on a first policy group, and the first request message includes identification information of a second policy group; and the second policy group is a member policy group of the first policy group, and the second policy group includes one or more member policies.

With reference to the fourth aspect, in some implementations of the fourth aspect, the policy group management operation includes either of the following: policy group creation and policy group update.

With reference to the fourth aspect, in some implementations of the fourth aspect, the first request message further includes parameter information of the first policy group, and the parameter information of the first policy group includes at least one of the following: a highest-level NFV object to which a member policy of the first policy group is applied, a type of an operation and maintenance scenario to which a member policy of the first policy group is applied, a priority of the first policy group, and an identifier of a policy group that has a dependency with the first policy group.

According to a fifth aspect, a computer-readable storage medium is provided, where the computer-readable storage medium stores a computer program or instructions. When the computer program or the instructions are executed by a processor, the method according to the first aspect and any one of the possible implementations of the first aspect or the method according to the second aspect and any one of the possible implementations of the second aspect is performed.

According to a sixth aspect, a computer program product including instructions is provided. When the computer program product runs on a computer, the method according to the first aspect and any one of the possible implementations of the first aspect or the method according to the second aspect and any one of the possible implementations of the second aspect is performed.

According to a seventh aspect, a chip system is provided, including a processor, configured to invoke a computer program or instructions from a memory and run the computer program or the instructions, to cause a communication apparatus on which the chip system is installed to implement the method according to the first aspect and any one of the possible implementations of the first aspect or the method according to the second aspect and any one of the possible implementations of the second aspect.

### BRIEF DESCRIPTION OF DRAWINGS

FIG. 1 is a diagram of an architecture of an NFV-MANO system;
FIG. 2 is a schematic flowchart of a policy group management method according to an embodiment of this application;
FIG. 3 is a schematic flowchart of a management method 300 for creating a policy group according to an embodiment of this application;
FIG. 4 is a schematic flowchart of a management method 400 for updating a policy group according to an embodiment of this application;
FIG. 5 is a schematic flowchart of a management method 500 for deleting a policy group according to an embodiment of this application;
FIG. 6 is a block diagram of a communication apparatus 600 according to an embodiment of this application;
FIG. 7 shows another communication apparatus 700 according to an embodiment of this application; and
FIG. 8 shows a chip system 800 according to an embodiment of this application.

### DESCRIPTION OF EMBODIMENTS

The following describes the technical solutions of this application with reference to the accompanying drawings.

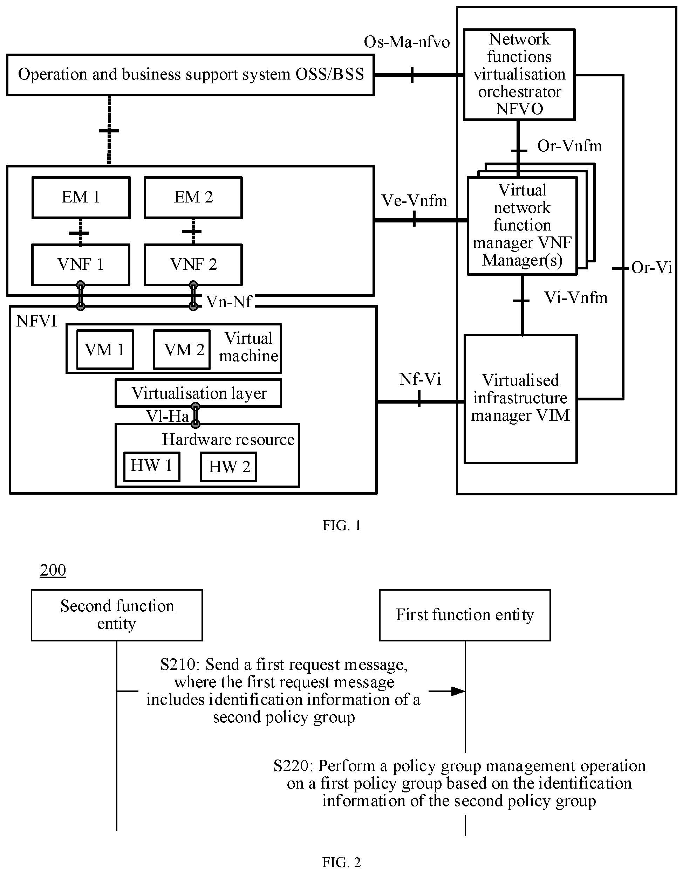

FIG. 1 is a diagram of an architecture of an NFV management and orchestration (network functions virtualisation management and orchestration, NFV-MANO) system. As shown in FIG. 1, the NFV-MANO includes three main functional modules: an NFV orchestrator (NFV orchestrator, NFVO), a VNF manager (VNF manager, VNFM), and a virtualised infrastructure manager (virtualised infrastructure manager, VIM).

The NFV orchestrator orchestrates services and resources, manages network services, and integrates VNFs into an NFV architecture. The NFV orchestrator can further verify and authorize an NFV infrastructure (NFV infrastructure, NFVI) resource request. The VNF manager manages a VNF lifecycle, and the VIM manages an NFV infrastructure, including computing resources, storage resources, network resources, and the like. An operation support system (operation support system, OSS) and a business support system (business support system, BSS) of an operator interwork with the NFV-MANO system. It should be noted that introducing the foregoing management operations is a basic function for the NFV-MANO to support an automatic operation and maintenance scenario.

A policy management function of the NFV-MANO includes policy group management, that is, management operations such as adding, deleting, modifying, and querying one or more policy groups. A policy group refers to an object structure including a group of policies that need to be executed as a whole (for example, activating the policies or deactivating the policies).

A gain of introducing policy group management operations is to search for policies that need to be consistently executed in a collaborative manner from a large quantity of management policies running in the NFV-MANO system. These policies serve automatic operation and maintenance management scenarios of a high-level application management policy, for example, NS auto scaling (NS scaling) and NS healing (NS healing). In a same policy group, consistency of start moments and semantics of collaborative execution of a plurality of different policies can be ensured. This reduces a probability of a policy execution conflict resulting from application of a plurality of different but associated policies due to a lack of planning for policies to be consistently executed.

Currently, a policy group information model used in the policy group management operation is a flat information structure, to be specific, a policy group includes a plurality of policy individuals (referred to as member policies of the policy group), and the policy individuals are identified in the policy group based on identification information of the policy individuals, as shown in the following: Policy group A: {policy 1, policy 2, policy 3, ..., policy n}. The foregoing policy group information model has some limitations in an NFV-MANO policy group management scenario.

For example, in complex automatic operation and maintenance scenarios involving management of a large quantity of interrelated policies, costs of a policy group update operation are high. First, each member policy needs to be individually validated to determine whether adding or moving a member from a policy group is feasible (that is, considering correlation with other member policies in the group for consistent execution). Second, efficiency of the policy group update operation is low, as member policies being added to or removed from the policy group need to be processed individually.

Based on this, embodiments of this application provide a policy group management method. In complex automatic operation and maintenance NFV-MANO scenarios, policies that require consistent collective execution can be flexibly orchestrated, and costs of a policy group update operation can be reduced.

The following describes in detail the policy group management method in embodiments of this application with reference to specific embodiments.

It should be first noted that, embodiments of this application may be applied to the NFV-MANO system described above in complex automatic operation and maintenance NFV-MANO scenarios involving management of a large quantity of policy groups that require collaborated execution. The following describes in detail several possible complex automatic operation and maintenance scenarios to which embodiments of this application are applicable.

Scenario 1: There is a common policy p in both policy group A and policy group B. If application scenarios (for example, NS healing) of policy group A cover a broader scope than application scenarios (for example, VNF healing) of policy group B, policy group B is incorporated into policy group A as a nested substructure.

Scenario 2: There is no common policy between policy group A and policy group B, but there is a dependency (dependency) between policy p1 in policy group A and policy p2 in policy group B. For example, the dependency (dependency) may be defined by using a context item (Context Item) in a policy information model, indicating that execution of policy p1 depends on execution of policy p2. In this case, policy group A may be incorporated into policy group B, or policy group B may be incorporated into policy group A.

Scenario 3: If policy group A has successfully applied in a prior automatic operation and maintenance scenario, and larger policy group B needs to be created in another associated extended prior automatic operation and maintenance scenario, policy group A is incorporated into policy group B.

It should be noted that the foregoing automatic operation and maintenance scenarios are merely examples for description. In addition to the foregoing enumerated automatic operation and maintenance scenarios, embodiments of this application may be further applicable to other automatic operation and maintenance scenarios. It should be understood that this is not limited in embodiments of this application.

It should be understood that, in embodiments of this application, a noun "function entity" represents a functional component in an NFV architecture. For example, the function entity may be an NFVO, an OSS, a VNF, or a VNFM. The "function entity" may also be referred to as "functional component", "device", "apparatus", or the like. This is not limited in embodiments of this application.

FIG. 2 is a schematic flowchart of a policy group management method 200 according to an embodiment of this application. The policy group management method 200 may be applied to an NFV-MANO architecture. As shown in FIG. 2, the method includes at least the following steps.

It should be noted that for specific descriptions of the NFV-MANO architecture, refer to the foregoing descriptions. Details are not described herein again.

S210: A second function entity sends a first request message to a first function entity. Correspondingly, the first function entity receives the first request message.

Specifically, the first function entity may be an NFVO, and the second function entity may be an OSS/BSS. The first request message is used to request to perform a policy group management operation on a first policy group, and the first request message includes identification information of a second policy group.

The second policy group is a member policy group of the first policy group, and the second policy group includes one or more member policies. It should be understood that the identification information of the second policy group is used to uniquely identify the second policy group that is added as a member to a to-be-created policy group (for example, the first policy group).

It should be noted that for the identification information of the second policy group, refer to a conventional technology or a protocol. Details are not described herein again.

S220: The first function entity performs the policy group management operation on the first policy group based on the identification information of the second policy group.

Specifically, after receiving the identification information of the second policy group included in the first request message, the first function entity performs the policy group management operation on the first policy group based on the identification information of the policy group.

In this embodiment of this application, the policy group management operation may be policy group creation, or may be policy group update.

Optionally, when the policy group management operation is the policy group creation, the first function entity performs, on the first policy group based on the identification information of the second policy group, a management operation of the policy group creation.

Specifically, the first function entity receives the first request message, where the first request message is used to request to perform the policy group creation on the first policy group. The first function entity determines, based on the identification information that is of the second policy group and that is carried in the first request message, to add all the member policies of the second policy group to the to-be-created first policy group.

Optionally, in a possible implementation, the method may further include: The first function entity sends a first response message to the second function entity, where the first response message carries identification information of the first policy group.

Specifically, after creating the first policy group, the first function entity allocates the corresponding identification information to the first policy group, and sends the first response message to the second function entity, where the first response message carries the identification information of the first policy group.

It should be understood that a solution in which the first function entity allocates the identification information to the first policy group is not within the protection scope of this application. Details are not described herein.

Optionally, in a possible implementation, the first request message may further include parameter information of the first policy group. The method may further include: The first function entity configures the parameter information of the first policy group.

Specifically, the parameter information of the first policy group may be at least one of the following: a highest-level NFV object to which a member policy of the first policy group is applied, a type of an operation and maintenance scenario to which a member policy of the first policy group is applied, a priority of the first policy group, and an identifier of a policy group that has a dependency with the first policy group.

For ease of understanding, the following describes in detail the parameter information of the first policy group in this embodiment of this application.
1. The highest-level NFV object to which the member policy of the first policy group is applied indicates a highest-level object in NFV objects to which the member policy of the first policy group and/or the member policy group of the first policy group are/is applied.
   For example, if the member policy of the first policy group is separately applied to an NS, a VNF, a managed container infrastructure object (managed container infrastructure object, MCIO), and a virtual machine (virtual machine, VM) object, it is indicated that the NS is the highest-level object to which the member policy of the first policy group is applied.
2. The type of the operation and maintenance scenario to which the member policy of the first policy group is applied may include, for example, operation and maintenance scenarios such as upgrade (upgrade), auto scaling (scale), or healing (heal).
3. Priority of the first policy group: The priority of the first policy group is determined. When a conflict occurs between the member policy of the first policy group and a member policy of policy group B during execution, a policy group (for example, the first policy group) with a low priority is determined based on a priority relationship of the policy groups to avoid policy execution. That is, a deactivation operation (deactivate policy) is performed on a member policy of the policy group with the low priority.
   For example, in a scenario in which two policy groups conflict during execution, the two policy groups may be policy groups respectively applied to two member VNF instances of one NS instance.
4. The identifier of the policy group that has the dependency with the first policy group indicates the policy group that has the dependency with the first policy group,
   for example, a policy group to which one composite NS instance is applied and a policy group to which a nested NS instance of the composite NS instance is applied, or policy groups to which two member VNF instances that have a connection relationship in an NS topology relationship are applied.

Optionally, when the policy group management operation is the policy group update, the first request message is used to request to perform the policy group update on the first policy group. The first function entity performs, on the first policy group based on the identification information that is of the second policy group and that is carried in the first request message, a policy group management operation of the policy group update.

For example, when the second policy group is a policy group to be deleted from the first policy group, the first function entity deletes the second policy group from the first policy group based on the identification information of the second policy group.

Deleting the second policy group from the first policy group may be understood as moving the second policy group out of the first policy group. That is, deletion may be understood as "moving out" or "removing". This is not limited herein.

For example, when the second policy group is a member policy group to be added to the first policy group, the first function entity adds the second policy group to the first policy group based on the identification information of the second policy group.

Adding the second policy group to the first policy group may be understood as adding all the member policies of the second policy group to the first policy group. That is, addition may be understood as "adding" or "increasing". This is not limited herein.

Optionally, in a possible implementation, when the policy group management operation is the policy group update, the first request message may alternatively carry identification information of a first member policy, where the first member policy belongs to the second policy group. In other words, the first request message may alternatively not directly carry the identification information of the second policy group.

For example, when the first member policy in the policy group update is a member policy of a to-be-deleted policy group, the first function entity determines, based on the identification information that is of the first member policy and that is carried in the first request message, that the first member policy belongs to the second policy group, and determines to delete the second policy group from the first policy group.

For example, when the first member policy in the policy group update is a member policy of a to-be-added policy group, the first function entity determines, based on the identification information that is of the first member policy and that is carried in the first request message, that the first member policy belongs to the second policy group, and determines to add all the member policies of the second policy group to the first policy group.

It should be noted that, that the first member policy belongs to the second policy group may also be described as that the first member policy is associated with the second policy group, or the first member policy and the second policy group are associated with each other. It should be understood that this is not limited in this application.

Optionally, after the first function entity performs the policy group update on the first policy group, the method may further include: The first function entity updates the parameter information of the first policy group.

Specifically, the first function entity further updates, based on a change of the member policy or the member policy group of the first policy group, parameter information of the first policy group that is obtained by performing the policy group update, for example, a highest-level NFV object to which a member policy of the first policy group is applied, a type of an operation and maintenance scenario to which a member policy of the first policy group is applied, a priority of the first policy group, and/or an identifier of a policy group that has a dependency with the first policy group. For specific descriptions of the parameter information of the first policy group, refer to the foregoing descriptions. Details are not described herein again.

Optionally, after the first function entity performs the policy group update on the first policy group, the method may further include: The first function entity sends a second response message to the second function entity, where the second response message indicates whether a result of the policy group update operation is a success or a failure.

For example, the second response message carries indication information, and the indication information indicates whether a result of the policy group update operation is a success or a failure.

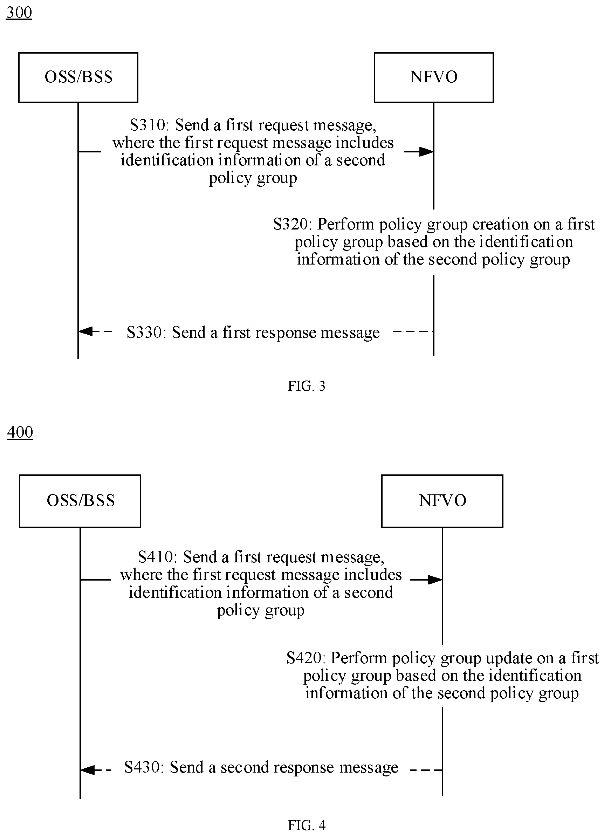

The following describes in detail specific embodiments of this application with reference to FIG. 3 to FIG. 5.

For ease of understanding, in the following embodiments, the NFVO is uniformly used to replace the first function entity, and the OSS/BSS is uniformly used to replace the second function entity for description.

FIG. 3 is a schematic flowchart of a management method 300 for creating a policy group according to an embodiment of this application. As shown in FIG. 3, the method includes at least the following steps.

S310: An OSS/BSS sends a first request message to an NFVO. Correspondingly, the NFVO receives the first request message.

Specifically, the first request message is used to request to perform policy group creation on a first policy group, and the first request message includes identification information of a second policy group. The second policy group is a member policy group of the first policy group, and the second policy group includes one or more member policies.

For example, the first request message may be a policy group creation request message.

It should be understood that the identification information of the second policy group is used to uniquely identify a policy group that is added as a member to a to-be-created policy group (for example, the first policy group).

Optionally, the first request message may further include basic description information of the to-be-created first policy group (Group Descriptor).

S320: The NFVO performs the policy group creation on the first policy group based on the identification information of the second policy group.

Specifically, the NFVO determines, based on the identification information of the second policy group, to add all the member policies of the second policy group to the first policy group.

Optionally, in a possible implementation, the first request message may further include parameter information of the first policy group. The method may further include: The NFVO configures the parameter information of the first policy group, for example, a highest-level NFV object to which a member policy of the first policy group is applied, a type of an operation and maintenance scenario to which a member policy of the first policy group is applied, a priority of the first policy group, and/or an identifier of a policy group that has a dependency with the first policy group.

It should be noted that for specific descriptions of the parameter information of the first policy group, refer to the foregoing descriptions. For brevity, details are not described herein again.

Optionally, in a possible implementation, the method may further include:
S330: The NFVO sends a first response message to the OSS/BSS. Correspondingly, the OSS/BSS receives the first response message.

For example, the first response message may be a policy group creation response message.

Specifically, the first response message carries identification information of the first policy group. After creating the first policy group, the NFVO allocates the corresponding identification information to the first policy group, and sends the first response message to the OSS/BSS, where the first response message carries the identification information of the first policy group.

FIG. 4 is a schematic flowchart of a management method 400 for updating a policy group according to an embodiment of this application. As shown in FIG. 4, the method includes at least the following steps.

S410: An OSS/BSS sends a first request message to an NFVO. Correspondingly, the NFVO receives the first request message.

Specifically, the first request message is used to request to perform policy group update on a first policy group, and the first request message includes identification information of a second policy group. The second policy group is a member policy group of the first policy group, and the second policy group includes one or more member policies.

For example, the first request message may be a policy group update request message.

S420: The NFVO performs the policy group update on the first policy group based on the identification information of the second policy group.

Optionally, when the second policy group is a policy group to be deleted from the first policy group, the NFVO deletes the second policy group from the first policy group based on the identification information of the second policy group.

Deleting the second policy group from the first policy group may be understood as moving the second policy group out of the first policy group. That is, deletion may be understood as "moving out" or "removing". This is not limited herein.

Optionally, when the second policy group is a member policy group to be added to the first policy group, the NFVO adds the second policy group to the first policy group based on the identification information of the second policy group.

Adding the second policy group to the first policy group may be understood as adding all the member policies of the second policy group to the first policy group. That is, addition may be understood as "adding" or "increasing". This is not limited herein.

Optionally, in a possible implementation, the first request message may alternatively carry identification information of a first member policy, where the first member policy belongs to the second policy group. In other words, the first request message may alternatively not directly carry the identification information of the second policy group.

For example, when the first member policy in the policy group update is a member policy of a to-be-deleted policy group, the NFVO determines, based on the identification information that is of the first member policy and that is carried in the first request message, that the first member policy belongs to the second policy group, and determines to delete the second policy group from the first policy group.

For example, when the first member policy in the policy group update is a member policy of a to-be-added policy group, the NFVO determines, based on the identification information that is of the first member policy and that is carried in the first request message, that the first member policy belongs to the second policy group, and determines to add all the member policies of the second policy group to the first policy group.

It should be noted that, that the first member policy belongs to the second policy group may also be described as that the first member policy is associated with the second policy group, or the first member policy and the second policy group are associated with each other. It should be understood that this is not limited in this application.

Optionally, after the NFVO performs the policy group update on the first policy group, the method may further include: The NFVO updates parameter information of the first policy group, for example, a highest-level NFV object to which a member policy of the first policy group is applied, a type of an operation and maintenance scenario to which a member policy of the first policy group is applied, a priority of the first policy group, and/or an identifier of a policy group that has a dependency with the first policy group.

Specifically, the NFVO further updates, based on a change of the member policy or the member policy group of the first policy group, parameter information of the first policy group that is obtained by performing the policy group update. For specific descriptions of the parameter information of the first policy group, refer to the foregoing descriptions. Details are not described herein again.

Optionally, after the NFVO performs the policy group update on the first policy group, the method may further include:
S430: The NFVO sends a second response message to the OSS/BSS, where the second response message indicates whether a result of the policy group update operation is a success or a failure.

For example, the second response message may be a policy group update response message.

For example, the second response message may carry indication information, and the indication information indicates whether a result of the policy group update operation is a success or a failure.

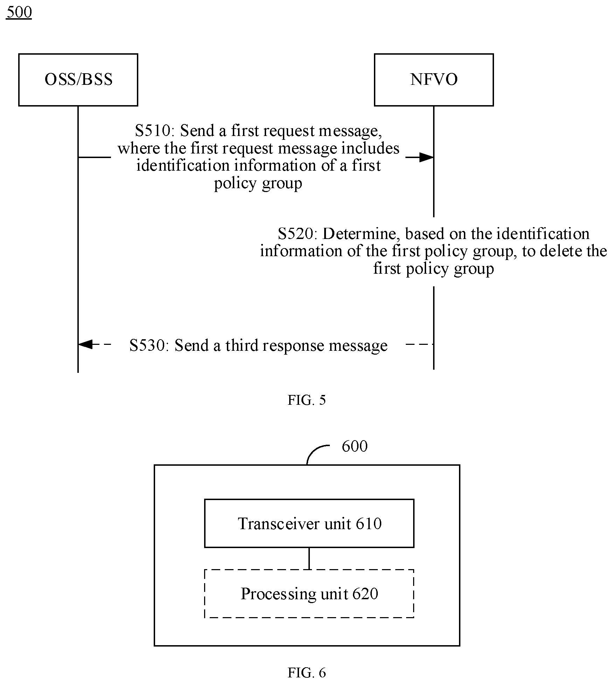

FIG. 5 is a schematic flowchart of a management method 500 for deleting a policy group according to an embodiment of this application. As shown in FIG. 5, the method includes at least the following steps.

S510: An OSS/BSS sends a first request message to an NFVO. Correspondingly, the NFVO receives the first request message.

Specifically, the first request message includes identification information of a to-be-deleted first policy group.

For example, the first request message may be a policy group deletion request message.

S520: The NFVO determines, based on the identification information of the first policy group, to delete the first policy group.

Specifically, the NFVO determines, based on the identification information that is of the first policy group and that is carried in the first request message, to delete the first policy group, but the NFVO still retains a member policy group of the first policy group, so that another policy group can reuse the member policy group.

S530: The NFVO sends a third response message to the OSS/BSS, where the third response message indicates whether a result of the policy group deletion operation is a success or a failure.

For example, the third response message may be a policy group deletion response message.

For example, the third response message may carry indication information, and the indication information indicates whether a result of the policy group deletion operation is a success or a failure.

Optionally, in a possible implementation, the first request message may further carry first indication information, and the first indication information indicates whether to delete all member policy groups of the first policy group.

For example, when the first indication information indicates to delete all the member policy groups of the first policy group, the NFVO synchronously deletes all the member policy groups of the first policy group when deleting the first policy group. In other words, the NFVO no longer retains the member policy group of the first policy group.

For example, when the first indication information indicates not to delete any member policy group from the first policy group, the NFVO does not delete any member policy group from the first policy group when deleting the first policy group. In other words, the NFVO retains the member policy group of the first policy group, so as to be reused by other policy groups.

According to the technical solution provided in this application, when a policy group management operation is performed on a policy group, the policy group management operation may be performed by member policy group. In this way, in complex automatic operation and maintenance NFV-MANO scenarios, policies that require consistent collective execution can be flexibly orchestrated, and costs of a policy group update operation can be reduced.

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean an execution sequence, but are merely intended for differentiation for ease of description, and therefore should not constitute any limitation on implementation processes of embodiments of this application.

It may be further understood that some message names, for example, a policy group creation request message or a first response message, are provided in embodiments of this application. It should be understood that the names do not limit the protection scope of embodiments of this application.

It may be further understood that, in the foregoing method embodiments, the methods and the operations implemented by the first function entity may alternatively be implemented by a component (for example, a chip or a circuit) of the first function entity. In addition, the methods and the operations implemented by the second function entity may alternatively be implemented by a component (for example, a chip or a circuit) of the second function entity. This is not limited. In correspondence to the methods provided in the foregoing method embodiments, embodiments of this application further provide corresponding communication apparatuses. The apparatuses include corresponding modules configured to perform the foregoing method embodiments. The module may be software, hardware, or a combination of software and hardware. It may be understood that the technical features described in the method embodiments are also applicable to the following apparatus embodiments.

It should be understood that the first function entity and the second function entity may perform some or all steps in the foregoing embodiments. These steps or operations are merely examples. In embodiments of this application, other operations or variations of various operations may be further performed. In addition, the steps may be performed in a sequence different from that presented in the foregoing embodiments, and not all the operations in the foregoing embodiments may need to be performed.

The foregoing describes in detail the policy group management methods provided in embodiments of this application with reference to FIG. 2 to FIG. 5. The following describes in detail the communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, details of some content are not described herein again.

FIG. 6 is a block diagram of a communication apparatus according to an embodiment of this application. The apparatus 600 includes a transceiver unit 610, and the transceiver unit 610 may be configured to implement a corresponding communication function. The transceiver unit 610 may also be referred to as a communication interface or a communication unit.

Optionally, the apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, so that the apparatus implements actions of different terminal devices in the foregoing method embodiments, for example, actions of the first function entity or the second function entity.

The apparatus 600 may be configured to perform actions performed by the first function entity or the second function entity in the foregoing method embodiments. In this case, the apparatus 600 may be the first function entity or the second function entity, or a component of the first function entity or the second function entity. The transceiver unit 610 is configured to perform sending and receiving related operations of the first function entity or the second function entity in the foregoing method embodiments. The processing unit 620 is configured to perform a processing related operation of the first function entity or the second function entity in the foregoing method embodiments.

For example, the first function entity may be an NFVO entity, and the second function entity may be a policy decision entity (for example, an OSS/BSS).

It should be further understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the first function entity or the second function entity in the foregoing embodiments, and may be configured to perform procedures and/or steps corresponding to the first function entity or the second function entity in the foregoing method embodiments; or the apparatus 600 may be specifically the first function entity or the second function entity in the foregoing embodiments, and may be configured to perform procedures and/or steps corresponding to the first function entity or the second function entity in the foregoing method embodiments. To avoid repetition, details are not described herein again.

The apparatus 600 in the foregoing solutions has a function of implementing corresponding steps performed by the first function entity or the second function entity in the foregoing method, or the apparatus 600 in the foregoing solutions has a function of implementing corresponding steps performed by the first function entity or the second function entity in the foregoing method. The function may be implemented by hardware, or may be implemented by hardware by executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and related processing operations in the method embodiments.

In addition, the transceiver unit 610 may alternatively be a transceiver circuit (which may include, for example, a receiving circuit and a sending circuit), and the processing unit may be a processing circuit.

It should be noted that the apparatus in FIG. 6 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

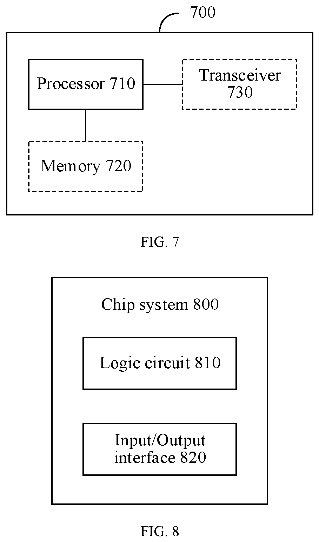

As shown in FIG. 7, an embodiment of this application provides another communication apparatus 700. The apparatus 700 includes a processor 710. The processor 710 is coupled to a memory 720. The memory 720 is configured to store a computer program or instructions and/or data. The processor 710 is configured to: execute the computer program or the instructions stored in the memory 720, or read the data stored in the memory 720, to perform the method in the foregoing method embodiments.

Optionally, there are one or more processors 710.

Optionally, there are one or more memories 720.

Optionally, the memory 720 and the processor 710 are integrated together, or are disposed separately.

Optionally, as shown in FIG. 7, the apparatus 700 further includes a transceiver 730, and the transceiver 730 is configured to receive and/or send a signal. For example, the processor 710 is configured to control the transceiver 730 to receive and/or send the signal.

In a solution, the apparatus 700 is configured to implement operations performed by the first function entity or the second function entity in the foregoing method embodiments.

For example, the processor 710 is configured to execute the computer program or the instructions stored in the memory 720, to implement related operations of a first SMF in the foregoing method embodiments, for example, the first function entity in any one of the embodiments shown in FIG. 2 to FIG. 5, or the method of the first function entity in any one of the embodiments shown in FIG. 2 to FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

In a solution, the chip system 800 is configured to implement operations performed by the first function entity or the second function entity in the foregoing method embodiments.

For example, the logic circuit 810 is configured to implement a processing related operation performed by the first function entity in the foregoing method embodiments, for example, a processing related operation performed by the first function entity in any one of the embodiments shown in FIG. 2 to FIG. 5. The input/output interface 820 is configured to implement sending and/or receiving related operations performed by the first function entity in the foregoing method embodiments, for example, sending and/or receiving related operations performed by the first function entity in any one of the embodiments shown in FIG. 2 to FIG. 5.

An embodiment of this application further provides a computer-readable storage medium. The computer-readable storage medium stores computer instructions for implementing the method performed by the first function entity or the second function entity in the foregoing method embodiments.

For example, when the computer program is executed by a computer, the computer is caused to implement the method performed by the first function entity or the second function entity in the foregoing method embodiments.

An embodiment of this application further provides a computer program product, including instructions. When the instructions are executed by a computer, the method performed by the first function entity or the second function entity in the foregoing method embodiments is implemented.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

Units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A policy group management method, applied to a network functions virtualisation management and orchestration NFV-MANO architecture, and comprising:
receiving a first request message, wherein the first request message is used to request to perform a policy group management operation on a first policy group, and the first request message comprises identification information of a second policy group; and
performing the policy group management operation on the first policy group based on the identification information of the second policy group, wherein
the second policy group is a member policy group of the first policy group, and the second policy group comprises one or more member policies.

2. The method according to claim 1, wherein the policy group management operation comprises either of the following:
policy group creation and policy group update.

3. The method according to claim 2, wherein when the policy group management operation is the policy group creation, the performing the policy group management operation on the first policy group based on the identification information of the second policy group comprises:
determining, based on the identification information of the second policy group, to add the member policy of the second policy group to the first policy group.

4. The method according to claim 3, wherein the first request message further comprises parameter information of the first policy group, and the method further comprises:
configuring the parameter information of the first policy group, wherein
the parameter information of the first policy group comprises at least one of the following:
a highest-level NFV object to which a member policy of the first policy group is applied, a type of an operation and maintenance scenario to which a member policy of the first policy group is applied, a priority of the first policy group, and an identifier of a policy group that has a dependency with the first policy group.

5. The method according to claim 2, wherein when the policy group management operation is the policy group update, and the second policy group is a policy group to be deleted from the first policy group,
the performing the policy group management operation on the first policy group based on the identification information of the second policy group comprises:
deleting the second policy group from the first policy group based on the identification information of the second policy group.

6. The method according to claim 2, wherein when the policy group management operation is the policy group update, and the second policy group is a member policy group to be added to the first policy group,
the performing the policy group management operation on the first policy group based on the identification information of the second policy group comprises:
adding the second policy group to the first policy group based on the identification information of the second policy group.

7. The method according to claim 5 or 6, wherein the method further comprises:
updating parameter information of the first policy group, wherein the parameter information of the first policy group comprises at least one of the following:
a highest-level NFV object to which a member policy of the first policy group is applied, a type of an operation and maintenance scenario to which a member policy of the first policy group is applied, a priority of the first policy group, and an identifier of a member policy group that has a dependency with the first policy group.

8. A policy group management method, applied to a network functions virtualisation management and orchestration NFV-MANO architecture, and comprising:
sending a first request message, wherein the first request message is used to request to perform a policy group management operation on a first policy group, and the first request message comprises identification information of a second policy group; and
the second policy group is a member policy group of the first policy group, and the second policy group comprises one or more member policies.

9. The method according to claim 8, wherein the policy group management operation comprises either of the following:
policy group creation and policy group update.

10. The method according to claim 8 or 9, wherein the first request message further comprises parameter information of the first policy group, and the parameter information of the first policy group comprises at least one of the following:
a highest-level NFV object to which a member policy of the first policy group is applied, a type of an operation and maintenance scenario to which a member policy of the first policy group is applied, a priority of the first policy group, and an identifier of a policy group that has a dependency with the first policy group.

11. A communication apparatus, comprising:
a transceiver unit, configured to receive a first request message, wherein the first request message is used to request to perform a policy group management operation on a first policy group, and the first request message comprises identification information of a second policy group; and
a processing unit, configured to perform the policy group management operation on the first policy group based on the identification information of the second policy group, wherein
the second policy group is a member policy group of the first policy group, and the second policy group comprises one or more member policies.

12. The communication apparatus according to claim 11, wherein the policy group management operation comprises either of the following:
policy group creation and policy group update.

13. The communication apparatus according to claim 12, wherein when the policy group management operation is the policy group creation, the processing unit is specifically configured to:
determine, based on the identification information of the second policy group, to add the member policy of the second policy group to the first policy group.

14. The communication apparatus according to claim 13, wherein the first request message further comprises parameter information of the first policy group, and the processing unit is further configured to:
configure the parameter information of the first policy group, wherein
the parameter information of the first policy group comprises at least one of the following:
a highest-level NFV object to which a member policy of the first policy group is applied, a type of an operation and maintenance scenario to which a member policy of the first policy group is applied, a priority of the first policy group, and an identifier of a policy group that has a dependency with the first policy group.

15. The communication apparatus according to claim 12, wherein when the policy group management operation is the policy group update, and the second policy group is a policy group to be deleted from the first policy group,
the processing unit is specifically configured to:
delete the second policy group from the first policy group based on the identification information of the second policy group.

16. The communication apparatus according to claim 12, wherein when the policy group management operation is the policy group update, and the second policy group is a member policy group to be added to the first policy group,
the processing unit is specifically configured to:
add the second policy group to the first policy group based on the identification information of the second policy group.

17. The communication apparatus according to claim 15 or 16, wherein the processing unit is specifically configured to:
update parameter information of the first policy group, wherein the parameter information of the first policy group comprises at least one of the following:
a highest-level NFV object to which a member policy of the first policy group is applied, a type of an operation and maintenance scenario to which a member policy of the first policy group is applied, a priority of the first policy group, and an identifier of a member policy group that has a dependency with the first policy group.

18. A communication apparatus, comprising:
a transceiver unit, configured to send a first request message, wherein the first request message is used to request to perform a policy group management operation on a first policy group, and the first request message comprises identification information of a second policy group; and
the second policy group is a member policy group of the first policy group, and the second policy group comprises one or more member policies.

19. The communication apparatus according to claim 18, wherein the policy group management operation comprises either of the following:
policy group creation and policy group update.

20. The communication apparatus according to claim 18 or 19, wherein the first request message further comprises parameter information of the first policy group, and the parameter information of the first policy group comprises at least one of the following:
a highest-level NFV object to which a member policy of the first policy group is applied, a type of an operation and maintenance scenario to which a member policy of the first policy group is applied, a priority of the first policy group, and an identifier of a policy group that has a dependency with the first policy group.

21. A computer-readable storage medium, wherein the computer-readable storage medium stores a computer program or instructions, and when the computer program or the instructions are executed by a processor, the method according to any one of claims 1 to 7 or the method according to any one of claims 8 to 10 is performed.

22. A computer program product comprising instructions, wherein when the computer program product runs on a computer, the method according to any one of claims 1 to 7 or the method according to any one of claims 8 to 10 is performed.

23. A chip system, comprising a processor, configured to invoke a computer program or instructions from a memory and run the computer program or the instructions, to cause a communication apparatus on which the chip system is installed to implement the method according to any one of claims 1 to 7 or the method according to any one of claims 8 to 10.
